# EUROPEAN PATENT APPLICATION

(11) **EP 3 382 434 A1**
(43) Date of publication of application: **03.10.2018**
(21) Application number: 17163118.7
(22) Date of filing: 27.03.2017
(51) Int. Cl.: G02B 6/43, H05K 7/14

(54) **MODULAR MID- OR BACKPLANE STRUCTURE**

(71) Applicant: Nokia Solutions and Networks Oy, 02610 Espoo (FI)
(72) Inventor: IMTAAR, Muhammad, Atyab, 90411 Nürnberg (DE); SEITZ, Reinhold, 90411 Nürnberg (DE)
(74) Representative: MERH-IP Matias Erny Reichl Hoffmann Patentanwälte PartG mbB

(57) **Abstract**

Provided is a system, comprising a mid- or backplane framing an interconnect cartridge. The mid- or backplane has a plurality of power connectors to provide electrical power to pluggable cards physically connected to the power connectors and a plurality of control signaling connectors, wherein the control signaling connectors are electrically connected via conductor paths extending along the mid- or backplane. The interconnect cartridge is removably attached to the mid- or backplane and has a plurality of interconnected electrical or optical data connectors configured to be physically connected to the pluggable I/O and switch cards.

## Description

### TECHNICAL FIELD

The present invention relates to mid- or backplanes for computer systems and network equipment. In particular, the present invention relates to a modular mid- or backplane structure having a detachable high-speed interconnect cartridge, thereby enabling reuse of the surrounding low-speed part when following the urge towards more powerful transmission technologies.

### BACKGROUND

While many current mid- and backplane designs are based on dielectric materials provided with connectors interconnected by stacked signal transmission layers comprising conductor paths and vias extending through the dielectric material, the trend towards ever increasing data throughput requirements drives the usage of dielectric materials imposing less dielectric loss on the signal flow. Moreover, when taking transmission speed a step further, switching to optical communication technologies may be inevitable for future high-speed data connections.

At the same time, economic feasibility demands to stick with once-installed equipment as long as possible and thus limits the possibility to replace existing equipment with more advanced technology within shorter and shorter product life-cycles. Hence, mid- and backplane structures are needed which allow to cope with the ever-increasing demand for data throughput while at the same time allowing to observe economic feasibility.

### SUMMARY

This requirement, as well as others which will be readily apparent to the skilled person when studying the description and claims, is satisfied by providing a system and methods which involve a modular mid- or backplane structure comprising a low-speed surrounding mid- or backplane (or outer mid-or backplane part) and a (physically separated yet-co-located) interconnect cartridge (or inner mid- or backplane part), wherein the interconnect cartridge serves as a detachable high-speed module that can be replaced as needed. For instance, the modular mid- or backplane structure for a network switch may have an interconnect link speed of about or above 15.6 Gb/s, 28Gb/s, 56Gb/s, 112 Gb/s, etc., and a capacity of about or above 1Tb/s per I/O card per slot.

The system comprises a mid- or backplane, the mid- or backplane having a plurality of power connectors to provide electrical power to pluggable cards physically connected to the power connectors and a plurality of control signaling connectors, wherein the control signaling connectors are electrically connected via conductor paths extending along the mid- or backplane, wherein the mid- or backplane frames an interconnect cartridge, the interconnect cartridge being removably attached to the mid- or backplane and having a plurality of interconnected electrical or optical data connectors configured to be physically connected to the pluggable cards. The system may be a data communication system or network equipment such as a switch or router, in particular for an optical transport network.

In this regard, the term "(surrounding) mid- or backplane" as used throughout the description and claims in particular refers to a stack of dielectric material layers sandwiching conductor paths extending along signal transmission layers, wherein the conductor paths are connected to/interconnect the connectors arranged on the surface of the mid- or backplane. In particular, the mid- or backplane may be directed at and serve for power and control signal distribution. Moreover, the term "connector" as used throughout the description and claims in particular refers to a structure which is configured to guide a fitting structure (such as a mating connector) to provide for alignment of the structures and, upon installation, restrain or inhibit a relative movement of the fitting structures.

Furthermore, the term "card" as used throughout the description and claims in particular refers to a printed circuit board (or blade) with active electronic components (e.g., an I/O card) which provides for electrical or optical data signals that are to be guided to one or more other cards plugged into the interconnect cartridge, e.g., via switch cards plugged into the interconnect cartridge.

In addition, the term "interconnect cartridge", as used throughout the description and claims in particular refers to a board/connector carrier structure comprising connectors interconnected via electrical or optical cables and/or embedded electrical or optical paths. Moreover, the expression "to frame" or "framing" as used throughout the description and claims in relation to the mid- or backplane and the interconnect cartridge in particular refers to a structure where the mid- or backplane surrounds, e.g., more than half, more than two thirds, or all of the interconnect cartridge when seen in a direction perpendicular to the surface from which the connectors extend (i.e., parallel to the plug-in direction). In addition, a precision or mounting frame may be used to position the interconnect cartridge relative to the mid- or backplane.

Thus, the interconnect cartridge may carry the high-speed data connections while the power and control signal connectors of the pluggable cards are plugged into the low-speed mid- or backplane. In order to increase transmission speed or when cards with different data connectors become available, e.g., cards using optical communication instead of electrical communication and hence carrying optical connectors instead of electrical connectors, the interconnect cartridge may be replaced with another interconnect cartridge having suitable interconnects (which allow for higher data transmission speeds) as well as suitable data connectors (e.g., electrical or optical data connectors).

Preferably, an inner edge of the mid- or backplane framing the interconnect cartridge is separated from an outer edge of the interconnect cartridge by a gap around the perimeter of the interconnect cartridge.

Hence, an accurate alignment of the interconnect cartridge and the surrounding mid- or backplane relative to each other may be possible even without precisely cut outer and inner edges of the interconnect cartridge and the mid- or backplane, respectively.

Preferably, the interconnect cartridge and the mid- or backplane are co-planarly arranged.

In this regard, it is noted that the term "co-planar" as used throughout the description and claims in particular refers to an interconnect cartridge and a mid- or backplane which are parallelly arranged, wherein surfaces that carry connectors which are assigned to the same cards, lie within one plane. Hence, it may be facilitated to use legacy cards, as connectors on the mid- or backplanes may have the same topology as one-piece mid- or backplanes.

Preferably, the mid- or backplane has a first planar base from which the power and control signaling connectors extend in a direction perpendicular to the first planar base and wherein the first planar base has a cut-out and the interconnect cartridge is arranged within or extends into the cut-out.

Hence, the mid- or backplane may be manufactured using common processing technologies and standard materials (e.g., epoxy resins) where an aperture for the interconnect cartridge may be cut from the mid- or backplane.

Preferably, the interconnect cartridge has a second planar base from which the data connectors extend in a direction perpendicular to the second planar base and wherein the second planar base is connected to a mounting frame or mounting arms extending in a direction parallel to the second planar base and attaching the second planar base to the mid- or backplane.

In this regard, it is noted that the terms "first", "second", "third", etc. as used throughout the description and claims primarily serve to distinguish between similar entities. For instance, the wording that the interconnect cartridge has a "second" planar is not intended to imply that the interconnect cartridge also has a first planar base, but serves to distinguish the planar base of the interconnect cartridge from the planar base of mid- or backplane which is referred to above as a "first" planar base.

Preferably, the interconnect cartridge or the mid- or backplane is provided with dowel pins and/or holes for aligning the interconnect cartridge and the mid- or backplane.

Moreover, the mid- or backplanes may be screwed to each other, or to an interconnecting mounting frame, to avoid loss of alignment.

Preferably, the system further comprises a chassis, wherein the interconnect cartridge and the mid- or backplane extend parallelly to a rear wall of the chassis, the rear wall comprising a recess for accommodating the interconnect cartridge, wherein the interconnect cartridge has a larger dimension in a horizontal direction than the mid- or backplane.

Accordingly, the chassis may be designed to allow for different interconnect cartridge layouts, e.g., for interconnect cartridges comprising cables which may substantially extend in the horizontal direction towards the rear wall, thereby avoiding a need to overly bend the cables.

Preferably, the mid- or backplane comprises conductor paths extending through a first dielectric material and the interconnect cartridge comprises conductor paths extending through a second dielectric material, wherein the second dielectric material provides for a lower dielectric loss than the first dielectric material.

Hence, the mid- or backplane can be made from low-priced epoxy resin such as FR₄, while the interconnect cartridge can be manufactured from a lower-loss dielectric material which allows for higher transmission speeds and hence more bandwidth.

Preferably, the interconnect cartridge comprises one or more of electrical connectors interconnected by conductor paths extending along the interconnect cartridge, and electrical connectors interconnected by discrete twinaxial cables.

Thus, different transmission technologies may be employable, making the modular mid- or backplane structure adaptable to ever changing technology scenarios.

Preferably, the interconnect cartridge comprises one or more of optical connectors interconnected by discrete optical fiber cables, optical connectors interconnected by an optical fiber shuffle, and optical connectors interconnected by embedded waveguides.

Hence, the interconnect cartridge may allow for even higher data throughput by using optical data transmission.

Preferably, the system further comprises a plurality of pluggable I/O and switch cards, the cards having electrical connectors electrically and physically connected to the power and control signaling connectors of the mid-or backplane and electrical or optical connectors physically connected to the electrical or optical data and switch connectors of the interconnect cartridge.

Thus, the I/O and switch cards are physically connected to the interconnect cartridge, thereby allowing to concentrate short high speed data transmission paths at the center of the structure while grouping power and control signaling paths at the periphery of the structure.

Preferably, connectors on the mid- or backplane and the interconnect cartridge that are assigned to the pluggable I/O and switch cards form parallel or orthogonal rows and/or columns of aligned connectors (or card slots).

Accordingly, I/O and switch cards may be arranged side-by-side, thereby achieving a compact structure with short data transmission paths.

A disclosed method comprises manufacturing a mid- or backplane for an electronic system, e.g. a network switch, the mid- or backplane having a base with a polygon-shaped cut-out or aperture, and arranging power and control signaling connectors on the base and connecting the control signaling connectors via conductor paths extending within the base. Preferably, the method further comprises manufacturing a polygon-shaped interconnect cartridge, the interconnect cartridge comprising a plurality of interconnected electrical or optical data connectors, and attaching the interconnect cartridge to the base of the mid- or backplane, wherein the interconnect cartridge may extend into the polygon-shaped cut-out or aperture.

Another disclosed method relates to assembling a system, the system comprising a mid- or backplane having a plurality of power connectors, the mid-or backplane having a base with a cut-out. The system may be a network switch in a communications network or part thereof. The method may comprise attaching an interconnect cartridge to the base of the mid- or backplane, the interconnect cartridge comprising a plurality of interconnected electrical or optical data connectors. The method may further comprise connecting a pluggable interface card (e.g. an I/O and switch card of the network switch) to at least one of the plurality of power connectors on the mid- or backplane to provide electrical power to the pluggable interface card, and to at least one of the plurality of electrical or optical data connectors on the interconnect cartridge. The mid- or backplane may further have control signaling connectors that are electrically connected via conductor paths extending along the mid- or backplane. The pluggable interface card may be connected to at least one of the control signaling connectors when attached to the mid- or backplane.

Preferably, the method further comprises providing a mounting frame, the mid- or backplane and the mounting frame comprising attachment means for removably attaching the mounting frame to the mid- or backplane.

Another disclosed method for operating the system comprises disconnecting an interface card from power and control signaling connectors on the mid- or backplane and from data connectors on the interconnect cartridge. The mid- or backplane may surround the interconnect cartridge. The method further comprises detaching the interconnect cartridge from the mid- or backplane, removing the interconnect cartridge, inserting a replacement interconnect cartridge, and attaching the replacement interconnect cartridge to the mid- or backplane. The mid- or backplane may surround the inserted replacement interconnect cartridge.

Thus, as described above, the modular mid- or backplane structure allows reusing the surrounding mid- or backplane and the chassis (rack installation) in combination with different interconnect cartridges, thereby reducing maintenance effort and costs and supporting a technology roadmap. For example, the interconnect cartridge may comprise electrical or optical interconnections between the data connectors, wherein the electrical or optical interconnections are of a first type. The replacement interconnect cartridge may comprise electrical or optical interconnections of a second type, which is different from the first type. Thus, successively employing electrical interconnections of different types is possible, as well as successively employing optical interconnections of different types. Also, it is possible to exchange electrical interconnections by optical interconnections and vice versa.

Preferably, the interconnect cartridge comprises electrical connectors and the replacement interconnect cartridge comprises optical connectors.

Hence, data transmission speed through the interconnect cartridge can be increased.

Preferably, the method further comprises connecting replacement I/O and switch cards to the optical connectors on the interconnect cartridge and the power and control signaling connectors on the mid- or backplane.

Hence, a capacity of the system can be increased by replacing the interconnect cartridge without having to discard the whole modular mid- or backplane structure/chassis/rack installation.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings, wherein like reference numerals refer to like parts throughout the various views, unless otherwise specified.
Fig. 1 shows a schematic front view of cards plugged into a modular backplane structure according to an exemplary embodiment relating to a single unit row (SUR) chassis;
Fig. 2 shows a schematic front view of cards plugged into a modular backplane structure according to another exemplary embodiment relating to a dual unit row (DUR) chassis;
Fig. 3 shows a schematic front view of cards plugged into a modular backplane structure according to yet another exemplary embodiment relating to an orthogonal dual unit row (ORTHO-DUR) chassis;
Fig. 4 shows a schematic front view of a backplane with an aperture;
Fig. 5 shows a schematic front view of a frame for attaching the interconnect cartridge to the backplane;
Fig. 5a shows a schematic cross-sectional view of the frame of Fig. 5 according to an exemplary embodiment in which the frame has a flush surface;
Fig. 5b shows a schematic cross-sectional view of the frame of Fig. 5 according to another exemplary embodiment in which the frame has a step;
Fig. 6 shows a schematic front view of a base of the interconnect structure;
Fig. 7a shows an exemplary embodiment of an assembly comprising elements similar to those shown in Fig. 4 and Fig. 5;
Fig. 7b shows another exemplary embodiment of an assembly comprising elements similar to those shown in Fig. 4 and Fig. 6;
Fig. 8a shows a schematic cross-sectional (side) view of an exemplary implementation of the modular backplane structure comprising a frame for thickness adaption;
Fig. 8b shows a schematic cross-sectional (side) view of another exemplary implementation of the modular backplane structure comprising a frame without thickness adaption;
Fig. 8c shows a schematic cross-sectional (side) view of yet another exemplary implementation of the modular backplane structure without frame;
Fig. 9 shows schematic cross-sectional (side) and front views of an exemplary implementation of the modular backplane structure of Fig. 8b with embedded interconnections;
Fig. 10 shows schematic cross-sectional (side) and front views of yet another exemplary implementation of the modular backplane structure with cable interconnects;
Fig. 11 shows a flow-chart of an exemplary process of manufacturing the mid- or backplane;
Fig. 12 shows a flow-chart of an exemplary process of assembling the mid-or backplane and the interconnect cartridge;
Fig. 13 shows an additional step of the process of Fig. 13 and 14;
Fig. 14 shows a flow-chart of an exemplary process for maintaining or adapting a modular mid- or backplane structure;
Fig. 15 shows an additional step of the process of Fig. 14;
Fig. 16 shows a flow-chart of another exemplary process for maintaining or adapting the modular mid- or backplane structure;
Fig. 17 shows an additional step of the process of Fig. 16.

### DETAILED DESCRIPTION

A basic aspect of this disclosure relates to a mid- or backplane which is physically divided into two parts, i.e., a surrounding mid- or backplane (of relatively high-loss material such as, for example, FR₄) which is used for power and control signals and is based on a generic, future-proof system architecture, and an interconnect cartridge (of low-loss material) which is used for high-speed signals. If required, the interconnect cartridge can be replaced with a more advanced interconnect cartridge, e.g., an interconnect cartridge of a material enabling even less dielectric loss, a cable interconnect (electrical or optical), or even optical waveguides, to meet future signal speed needs, independent from the surrounding mid- or backplane.

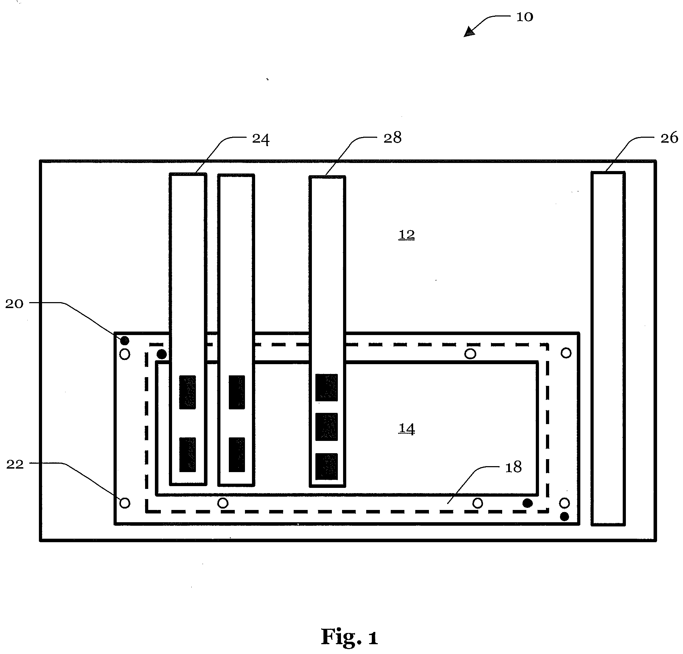

In this regard, Figs. 1 to 3 show (elements of) a data communication system 10 (such as a network switch) having a modular backplane structure. The modular backplane structure is (physically) divided into a surrounding backplane 12 and an interconnect cartridge 14 (or inner backplane part). The backplane 12, which is larger (in vertical dimensions) than the interconnect cartridge 14 draws a (co-planar) frame around the interconnect cartridge 14. For example, the backplane 12 and the interconnect cartridge 14 may substantially lie in a vertical plane with cards being orthogonally plugged into mating connectors of the backplane structure.

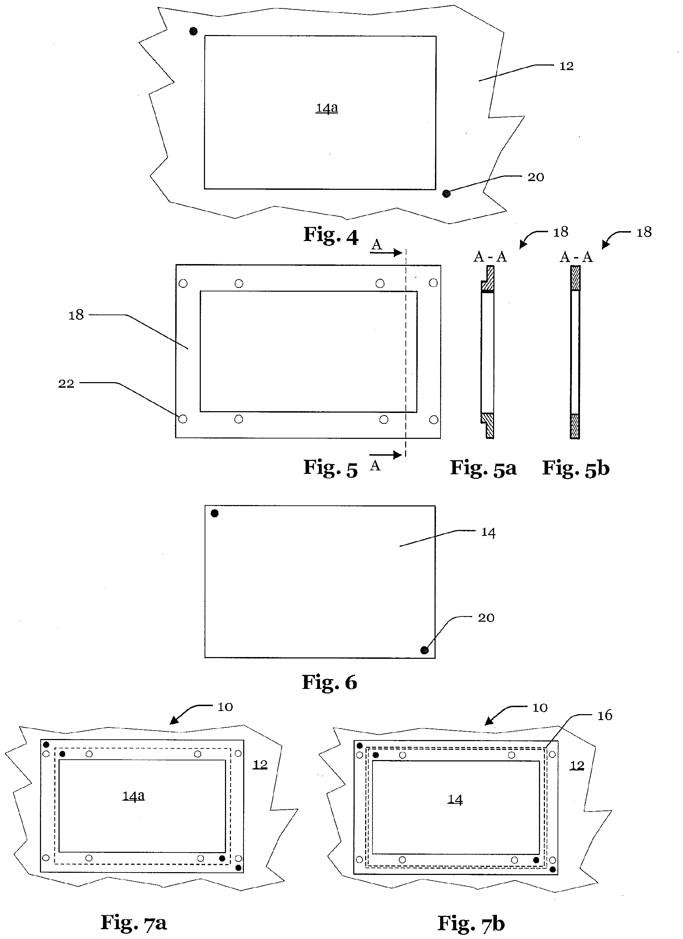

As shown in Fig. 1 to 3, both, the backplane 12 and the interconnect cartridge 14 may have a rectangular shape, although the backplane 12 and the interconnect cartridge 14 may also have other shapes such as a U-shape or a (double) T-shape. Hence, the interconnect cartridge 14 may be fitted/inserted into a rectangular aperture or recess 14a in a planar base of the backplane 12 (as illustrated in Fig. 4 and 7a). The inner edge of the backplane 12 may thus encircle the outer edge of the interconnect cartridge 14 (in a circumferential direction around the perimeter of the interconnect cartridge 14).

Moreover, as illustrated in Fig. 7b, a gap 16 may be formed between the interconnect cartridge 14 and the backplane 12. For instance, the gap 16 may extend along the (broken) lines illustrating the aperture or recess 14a and the interconnect cartridge 14. The gap 16 may be sized to allow for different thermal expansion coefficients of the materials from which the bases of the backplanes 12, 14 are manufactured. For example, if the thermal expansion coefficient of the interconnect cartridge 14 is larger than the thermal expansion coefficient of the backplane 12, the size of the gap 16 may shrink when the modular backplane structure heats up during operation. However, as the system may also be designed to have no gap 16 between the interconnect cartridge 14 and the backplane 12.

As shown in Figs. 1 to 3, the edges of the interconnect cartridge 14 and the backplane 12 may be covered (or overlain) by a mounting frame 18 (which is shown in more detail in Fig. 5) comprising threaded holes 22 for fixation screws (when seen in a direction perpendicular to the surfaces of the planar bases of the backplane 12 and the interconnect cartridge 14). As shown in Fig. 5a and 5b, the mounting frame 18 may extend into the aperture or recess 14a, but may also be substantially planar on both sides. Moreover, the interconnect cartridge 14 and the backplane 12 may comprise dowel pins 20 or matching holes for (horizontally and vertically) aligning the backplane 12 and the interconnect cartridge 14, as shown in Fig. 4 and 6.

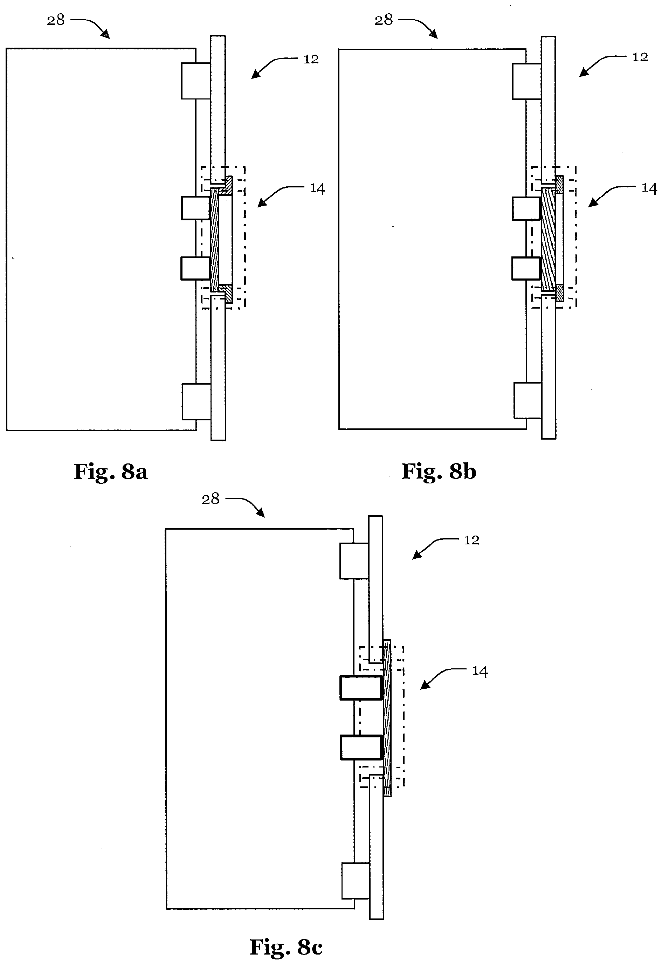

Moreover, instead of being attached to the backplane 12 by a square-shaped mounting frame 18 (as shown), the interconnect cartridge 14 may also be attached to the backplane 12 by multiple mounting frame segments or mounting arms (not shown). The mounting frame 18, mounting frame segments or mounting arms may align the backplane 12 and the interconnect cartridge 14 to be substantially co-planar, as will become more readily apparent from Fig. 8a and 8b. In addition, the mounting frame segments or mounting arms may be resilient to limit strain imposed on the backplane 12 and the interconnect cartridge 14 upon attachment.

During operation, the system 10 may be provided with I/O cards 24 (e.g., printed circuit boards with SERDES devices or optical transceivers) plugged into the backplane 12 and the interconnect cartridge 14, respectively. The I/O cards 24 may comprise power connectors physically connected to respective power connectors on the backplane 12, as well as control signaling connectors physically connected to control signaling connectors on the backplane 12. The I/O cards 24 may further receive/transmit external data via optical or electric cables attached to the I/O cards 24.

The system 10 may further comprise a controller card 26 having control signaling connectors which are physically connected to control signaling connectors on the backplane 12. The backplane 12 may comprise conductor paths which may be embedded into dielectric layers of the backplane 12. Said conductor paths may interconnect the control signaling connectors of the I/O cards 24 and the controller card 26, thereby allowing active (reconfigurable) control over the flow of data through the I/O cards 24 by the controller card 26. Furthermore, the backplane 12 may also comprise embedded conductor paths to supply power to the power connectors of the I/O cards 24, the controller card 26, and/or the switch card 28, wherein the power connectors are physically connected to the backplane 12.

During operation, the system 10 may be further equipped with a switch card 28 (physically) connected to (e.g., plugged into) the backplane 12 and the interconnect cartridge 14, respectively. I.e., the switch card 28 may receive power and control signaling via respective connectors on the backplane 12 while handling high-speed data traffic between the I/O cards 24 across the interconnect cartridge 14. Heretofore, the switch card 28 may comprise power, control signaling as well as data connectors, wherein the data connectors of the switch card 28 may be physically connected to respective data connectors on the interconnect cartridge 14.

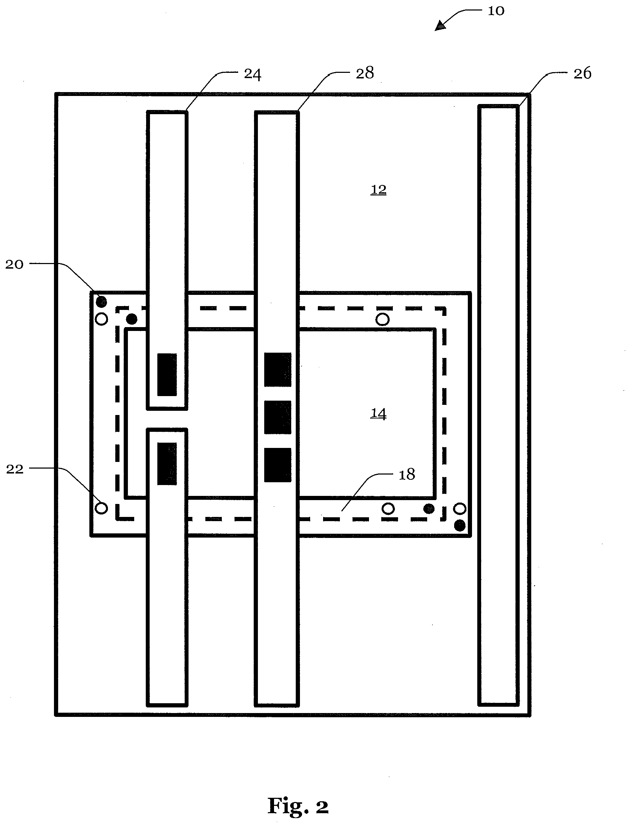

As shown in Fig. 1, a SUR chassis may comprise I/O cards 24 and at least one switch card 28 with data connectors at one side (in the vertical direction) and power and control signaling connectors at another side (of the vertical edge adjacent the modular backplane structure). Moreover, as shown in Fig. 2, a DUR chassis may, like the SUR chassis of Fig. 1, comprise I/O cards 24 with data connectors at one side and power and control signaling connectors at another side. However, the DUR may differ from the SUR in that the I/O cards 24 which are plugged into different rows may be flipped. I.e., the I/O cards 24 in the upper row may have the data connectors at a side pointing downwards while the I/O cards 24 in the lower row may have the data connectors at a side pointing upwards. However, it is clear that also full-height I/O cards may be used. The at least one switch card 28 may span the interconnect cartridge 12 and have data connectors at the center, while power and control signaling connectors may be provided at the sides.

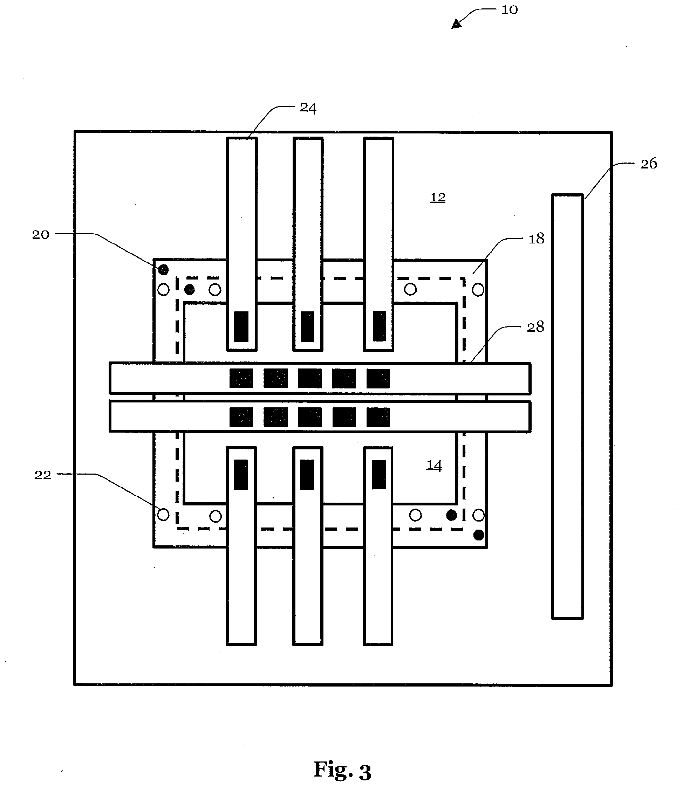

As shown in Fig. 3, an ORTHO-DUR chassis may comprise I/O cards 24 with data connectors at one side and power and control signaling connectors at another side, similar to the DUR chassis shown in Fig 2. However, unlike the DUR chassis shown in Fig. 2, the ORTHO-DUR chassis may comprise switch cards 28 spanning the interconnect cartridge 12 in a direction orthogonal to an extension direction of the I/O cards 24 (i.e., the horizontal direction). In this regard, it is to be noted that while Fig. 1 to 3 only show a single or a few cards of the same type in order not to obscure the drawings, the systems 10 may also comprise a higher number of cards (and respective connectors on the backplane 12 and on the interconnect cartridge 14).

As will be discussed in more detail below, the interconnect cartridge 14 may comprise data cables or data signaling paths embedded into the interconnect cartridge 14, interconnecting data connectors of the I/O cards 24 and the at least one switch card 28. This allows the at least one switch card 28 to receive/transmit data traffic from/to the I/O cards 24 via the interconnect cartridge 14. The interconnect cartridge 14 may comprise passive data communication paths which allow substantial higher communication speeds as compared to data communication paths on the backplane 12 which may, for example, be formed of a low-cost material such as FR₄.

As further shown in Fig. 1 to 3, the half-height (or half-slot) I/O cards 24, and the half-height and full-height (or full-slot) switch cards 28, respectively, may physically connect the backplane 12 and the interconnect cartridge 14, while the half-height and full-height controller cards 26, respectively, may (only) be physically connected to power and control signaling connectors on the backplane 12. Moreover, the vertically stacked half-height I/O cards 24 of the DUR chassis and the ORTHO-DUR chassis may divide the modular backplane structure into an upper half and a lower half of equal size, each half comprising about half of the interconnect cartridge 14, while the full-height cards, i.e. the controller card 26 and the switch card 28, may span the full height of the modular backplane structure.

However, it is clear that other configurations, e.g., a U-shaped or (double) T-shaped backplane surrounding (or framing) an interconnect cartridge 14 or a U-shaped or (double) T-shaped interconnect cartridge 14 would also be possible. For example, a modular backplane structure of two times the size (as compared to the one shown in Fig. 1) may comprise two U-shaped backplanes 12 of equal size surrounding an interconnect cartridge 14. In such a configuration, full-height cards may connect to the interconnect cartridge 14 by connectors arranged on the upper or lower end of the cards similar to the half-height cards shown in Fig. 1 (but opposed to the full-height cards shown in Fig. 2 and 3 having the connectors that are physically connected to the interconnect cartridge 14 at the card centers).

Moreover, while only two half-height I/O cards 24, one half-height or full-height controller card 26, and one half-height or full-height switch card 28 are shown in each of Fig. 1 and 2, it is clear that the modular backplane structure may comprise/be divided into any number of half-height or full-height slots, wherein the available slots may be fully occupied during operation with any combination of half-height or full-height cards. Hence, while the particular configurations shown in the figures only show a limited number of slots (e.g., 2 full-height and 2 half-height slots in Fig. 2), it is to be noted that this is not intended to be taken as limiting the presented modular backplane structure, but solely to not unnecessarily obscure the figures.

Fig. 8a shows a schematic cross-sectional (side) view of an exemplary implementation of the modular backplane structure. Similar to Fig. 5a, the mounting frame 18 extends into the aperture 14a. The base of the interconnect cartridge 14 has a smaller thickness than the base of the backplane 12 to allow for both bases to be substantially flush at the front-side of the modular backplane structure.

Fig. 8b shows a schematic cross-sectional (side) view of another exemplary implementation of the modular backplane structure. Similar to Fig. 5b, the mounting frame 18 does not extend into the aperture 14a. The base of the interconnect cartridge 14 may thus have a same thickness as the base of the backplane 12, while the bases are substantially flush at both, the front-side and the rear-side of the modular backplane structure.

Fig. 8c shows a schematic cross-sectional (side) view of yet another exemplary implementation of the modular backplane structure. In the backplane structure of Fig. 8c, no mounting frame 18 is used, but a base of the interconnect cartridge 14 spans over the entire aperture 14a while the connectors extend into the aperture 14a. As a consequence, in this embodiment, the base of the interconnect cartridge 14 is not flush with the base of the surrounding backplane 12. In general, an off-set between interconnect cartridge and the backplane is allowed and can be compensated by the rear edge of the inserted interconnect cartridge (e.g. notched areas).

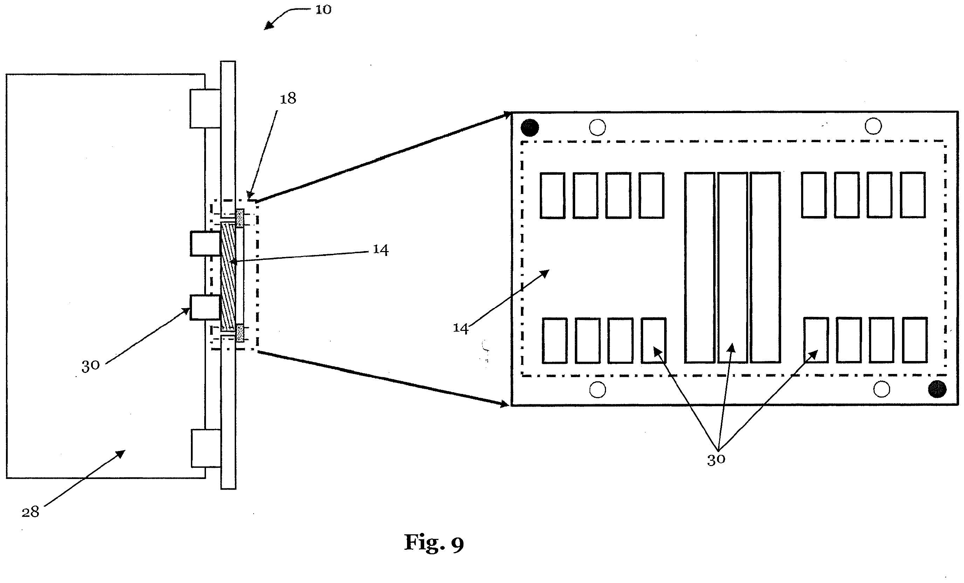

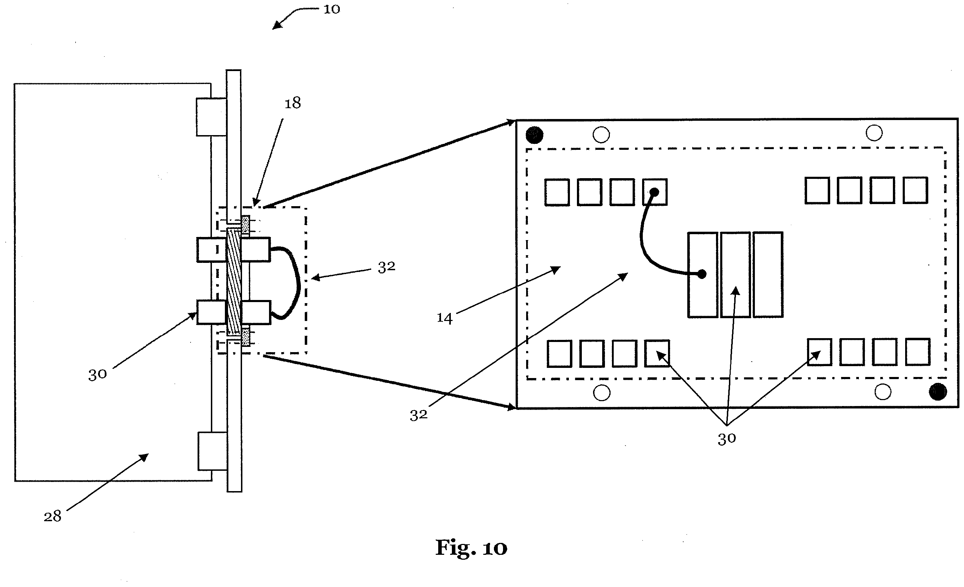

Fig. 9 and 10 show schematic cross-sectional and front views of further elements of the modular backplane structure on the basis of the configuration shown in in Fig. 8b, although the configurations shown in Figs. 8a and 8c would also be possible. In particular, Fig. 9 and 10 show possible arrangements of data connectors 30 on the (front-side of the) interconnect cartridge 14. As shown in Fig. 9 and 10, the data connectors 30 may be arranged in parallel rows and columns with the data connectors 30 assigned to the switch card 28 (or switch cards 28) being located at the middle (when seen from front to rear) to allow for equally short path lengths to the I/O card connectors at the periphery.

Moreover, while in Fig. 9 the interconnections between the data connectors 30 are embedded in the base, Fig. 10 shows a configuration where the interconnect cartridge 14 serves as a connector carrier (e.g., with data connectors 30 on the front-side and the back-side of the base) while the data connectors 30 are interconnected by cables 32 running on the back-side of the interconnect cartridge 14. For example, the cables 32 may be twinaxial cables, discrete optical fiber cables, an optical fiber shuffle, etc. In this regard, it is clear to the skilled person that cabling on the back-side of the interconnect cartridge 14 may require more chassis space to (accommodate the data connectors 30 on the back-side and) avoid too much bending the cables.

Moreover, it is noted that while Fig. 1 to Fig. 10 relate to a modular backplane structure, the features and principles shown and described may also be practiced in relation to a midplane which may be similar to the backplanes shown in the figures but differ in that the midplane also has connectors (slots) on its backside. In this regard, it is noted that the connectors (slots) on both sides may extend in parallel or orthogonal directions.

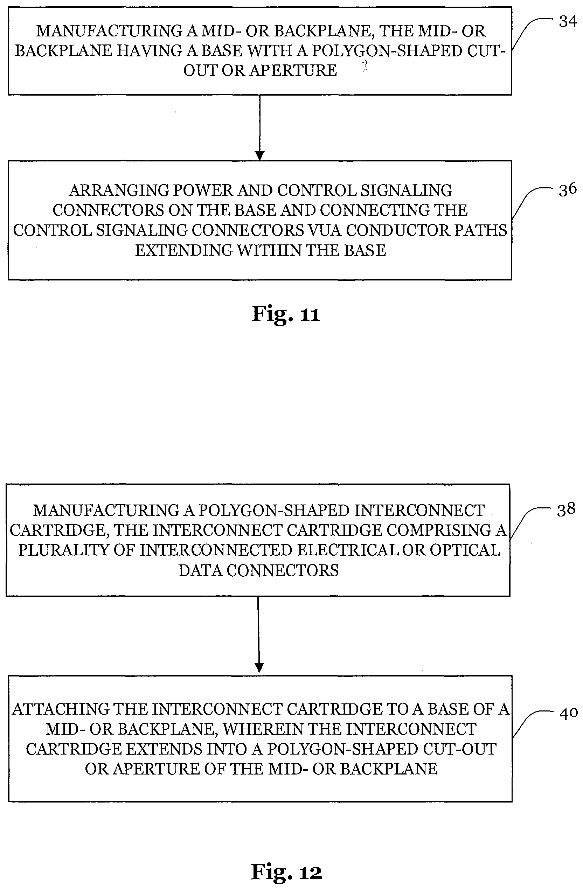

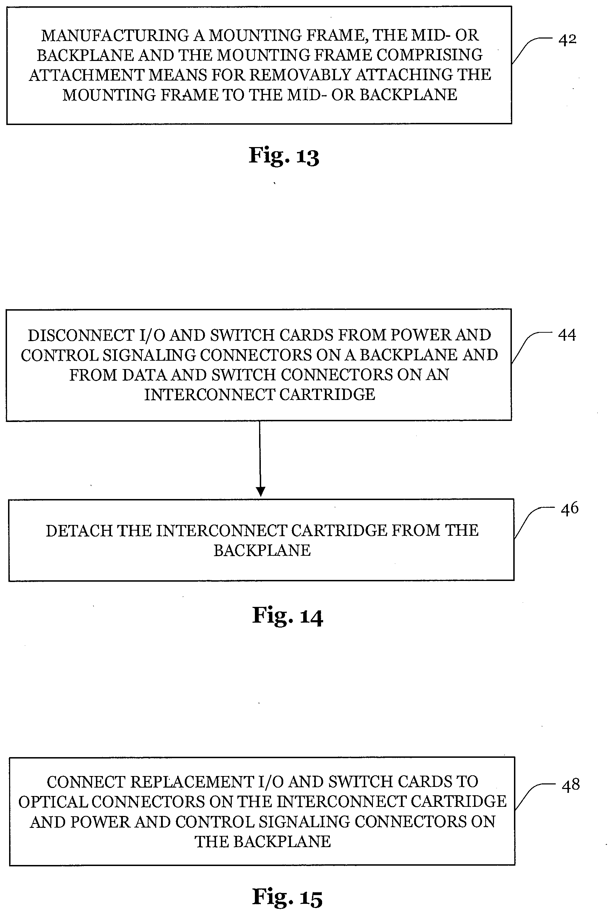

Fig. 11 shows a flow-chart of an exemplary process of manufacturing a mid- or backplane 12 while Fig. 12 shows a flow-chart of an exemplary process of assembling the mid-or backplane 12 and the interconnect cartridge 14. As shown in Fig. 8a and 8b, assembling may be eased by using the mounting frame 18 which may be manufactured according to step 42 shown in Fig. 13.

In further detail, the surrounding mid- or backplane may be a standard backplane made of FR₄ with standard manufacturing processes. The mounting frame may e.g. be made of/by sheet metal, LCP (liquid crystal plastics), plastic injection molding, aluminum-zinc die cast or MIM (metal injection molding), etc. The inner electrical backplane of the interconnect cartridge may be made from high-speed material (e.g. MEGTRON) with standard manufacturing processes. The inner optical backplane of the interconnect cartridge may be made with new technologies based on e.g. micro mirrors, beam expansion, optical wave guides, etc. The connector plate for electrical cable or optical cable/shuffle interconnect may e.g. be made of/by sheet metal, LCP (liquid crystal plastics), plastic injection molding, aluminum-zinc die cast or MIM (metal injection molding), etc. The rack or subrack may be assembled by commonly used equipment practice made of sheet metal or aluminum extrusions.

Figs. 14 and 15 show steps of a process for replacing the interconnect cartridge 14 with a replacement interconnect cartridge 14, wherein both interconnect cartridges 14 may be based on different technologies, as shown in Fig. 9 and 10. For example, the data connectors 30 on the interconnect cartridge 14 which is to be replaced, may be interconnected by conductor paths extending along the interconnect cartridge 14 or by discrete twinaxial cables, while the replacement interconnect cartridge 14 may comprise one or more of data connectors 30 interconnected by embedded waveguides, data connectors 30 interconnected by discrete optical fiber cables and data connectors 30 interconnected by an optical fiber shuffle.

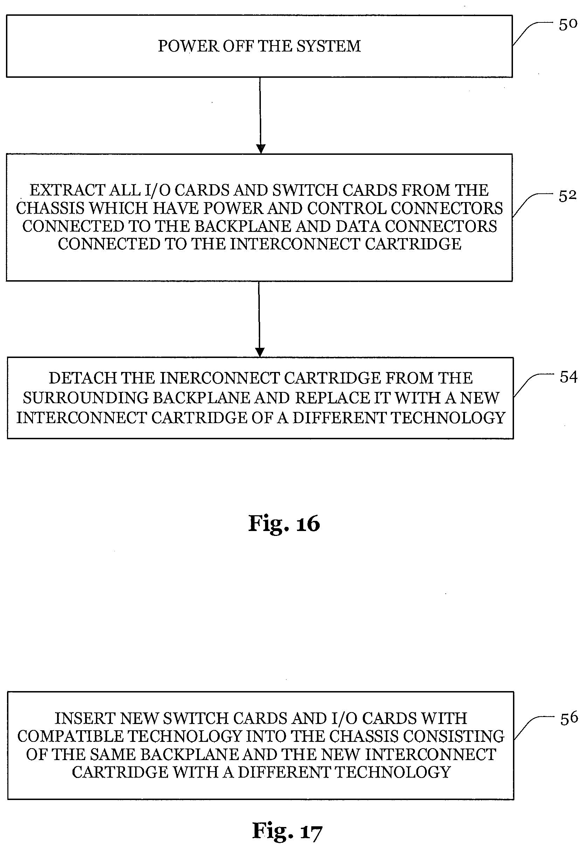

Figs. 16 and 17 show steps of another process for replacing the interconnect cartridge 14 with a replacement interconnect cartridge 14, wherein both interconnect cartridges 14 may be based on different technologies, as shown in Fig. 9 and 10.

Hence, the provided chassis allows to re-use the backplane 12 when being urged to increase the data speed across the system 10, by solely replacing the interconnect cartridge 14. Thus, the interconnect cartridge 14 serves as a high-speed module that determines (and limits) the data speed across the system 10, so that upon replacing the interconnect cartridge 14 with a module allowing a higher speed, the system 10 may be enabled to cope with higher data traffic demands, although main parts of the system 10 remain in use. Hence, a backplane structure is provided which allows to cope with the ever-increasing demand for data throughput while at the same time allowing to observe economic feasibility.

It should be noted that the system features described above correspond to respective method features that may however not explicitly be described, for reasons of conciseness. However, the disclosure of the present document is intended to extend also to such method features. Furthermore, it should be further noted that the description and drawings merely illustrate the principles of the proposed system and method. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed system.

Moreover, all statements herein providing principles, aspects, and embodiments of the invention, as well as specific examples thereof, are intended to encompass equivalents thereof. In addition, the present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

### LIST OF REFERENCE SIGNS

- 10: system
- 12: backplane
- 14: interconnect cartridge
- 14a: recess/aperture
- 16: gap
- 18: mounting frame
- 20: pin
- 22: hole
- 24: I/O card
- 26: controller card
- 28: switch card
- 30: connector
- 32: cable
- 34-56: process steps

## Claims

1. A system (10), comprising:
a mid- or backplane (12), the mid- or backplane (12) having a plurality of power connectors to provide electrical power to pluggable cards physically connected to the power connectors and a plurality of control signaling connectors, wherein the control signaling connectors are electrically connected via conductor paths extending along the mid- or backplane (12);
wherein the mid- or backplane (12) frames an interconnect cartridge (14), the interconnect cartridge (14) being removably attached to the mid- or backplane (12) and having a plurality of interconnected electrical or optical data connectors configured to be physically connected to the pluggable cards.

2. The system (10) of claim 1, wherein an inner edge of the mid- or backplane (12) framing the interconnect cartridge (14) is separated from an outer edge of the interconnect cartridge (14) by a gap (16) around the perimeter of the interconnect cartridge (14).

3. The system (10) of claim 1 or 2, wherein the interconnect cartridge (14) and the mid- or backplane (12) are co-planarly arranged.

4. The system (10) of any one of claims 1 to 3, wherein the mid- or backplane (12) has a first planar base from which the power and control signaling connectors extend in a direction perpendicular to the first planar base and wherein the first planar base has a cut-out and the interconnect cartridge (14) is arranged within or extends into the cut-out.

5. The system (10) of any one of claims 1 to 4, wherein the interconnect cartridge (14) has a second planar base from which the data connectors extend in a direction perpendicular to the second planar base and wherein the second planar base is connected to a mounting frame (18) or mounting arms extending in a direction parallel to the second planar base and attaching the second planar base to the mid- or backplane (12).

6. The system (10) of any one of claims 1 to 5, wherein the interconnect cartridge (14) or the mid- or backplane (12) is provided with dowel pins (20) and/or holes (22) for aligning the interconnect cartridge (14) and the mid- or backplane (12).

7. The system (10) of any one of claims 1 to 6, further comprising a chassis, wherein the interconnect cartridge (14) and the mid- or backplane (12) extend parallel to a rear wall of the chassis, the rear wall comprising a recess for accommodating the interconnect cartridge (14), wherein the interconnect cartridge (14) has a larger dimension in a horizontal direction than the mid- or backplane (12).

8. The system (10) of any one of claims 1 to 7, wherein the mid- or backplane (12) comprises conductor paths extending through a first dielectric material and the interconnect cartridge (14) comprises conductor paths extending through a second dielectric material, wherein the second dielectric material provides for a lower dielectric loss than the first dielectric material.

9. The system (10) of any one of claims 1 to 8, wherein the interconnect cartridge (14) comprises one or more of:
electrical connectors interconnected by conductor paths extending along the interconnect cartridge (14); and
electrical connectors interconnected by discrete twinaxial cables.

10. The system (10) of any one of claims 1 to 9, wherein the interconnect cartridge (14) comprises one or more of:
optical connectors interconnected by discrete optical fiber cables;
optical connectors interconnected by an optical fiber shuffle; and
optical connectors interconnected by embedded waveguides.

11. The system (10) of any one of claims 1 to 10, further comprising a plurality of pluggable I/O and switch cards, the cards having:
electrical connectors electrically and physically connected to the power and control signaling connectors of the mid- or backplane (12); and
electrical or optical connectors physically connected to the electrical or optical data connectors of the interconnect cartridge (14).

12. The system (10) of claim 11, wherein connectors on the mid- or backplane (12) and the interconnect cartridge (14) that are assigned to the pluggable I/O and switch cards form parallel or orthogonal rows and/or columns of aligned connectors.

13. A method of assembling a system, the system comprising a mid- or backplane (12) having a plurality of power connectors, the mid- or backplane (12) having a base with a cut-out, the method comprising:
attaching an interconnect cartridge (14) to the base of the mid- or backplane (12), the interconnect cartridge (14) comprising a plurality of interconnected electrical or optical data connectors;
connecting a pluggable interface card to at least one of the plurality of power connectors on the mid- or backplane (12) to provide electrical power to the pluggable interface card; and
connecting the pluggable interface card to at least one of the plurality of electrical or optical data connectors on the interconnect cartridge (14).

14. The method of claim 13, wherein
the cut-out of the mid- or backplane (12) is polygon-shaped and the interconnect cartridge (14) extends into the polygon-shaped cut-out, in particular the interconnect cartridge (14) and the mid- or backplane (12) are flush.

15. The method of claim 13 or 14, further comprising:
providing a mounting frame (18), the mid- or backplane (12) and the mounting frame (18) comprising attachment means for removably attaching the mounting frame (18) to the mid- or backplane (12).
